# EUROPÄISCHE PATENTSCHRIFT

(11) **EP 0 511 639 B1**
(45) Veröffentlichungstag und Bekanntmachung des Hinweises auf die Patenterteilung: **14.12.1994**
(21) Anmeldenummer: 92107255.9
(22) Anmeldetag: 29.04.1992
(51) Int. Cl.: F16D 65/12

(54) **Monoblock-Bremsscheibe**
Monoblock-brake disc
Monobloc-poulie de frein

(30) Priorität: 30.04.1991 DE 4114089
(43) Veröffentlichungstag der Anmeldung: 04.11.1992
(73) Patentinhaber: Bergische Stahl-Industrie, D-42859 Remscheid (DE)
(72) Erfinder: Wiebelhaus, Wolfgang, W-4330 Mühlheim-Ruhr (DE); Schneider, Jürgen Dr., W-4630 Bochum (DE); Gronemann, Manfred, W-5630 Remscheid (DE); Lehmann, Wolfgang, W-5630 Remscheid (DE)
(74) Vertreter: Dahlkamp, Heinrich-Leo

(56) Entgegenhaltungen:
- EP-A- 0 170 298
- GB-A- 2 033 509
- GB-A- 2 144 186
- US-A- 4 928 798
- US-A- 5 004 078

## Beschreibung

Die Erfindung betrifft eine Monoblock-Bremsscheibe für Scheibenbremsen für Schienenfahreuge, bei der einzelne die Bremsgurte miteinander verbindende Stege radial nach innen verlängert sind, wobei die Verlängerung in eine Nabe übergeht und alle Teile aus einem Stück bestehen.

Eine derartige aus Bremsgurten, Befestigungsstegen und Nabe bestehende Bremsscheibeneinheit ist für die Bremsmomentübertragung, Verbindung mit der Achswelle etc. optimal. Der grosse Nachteil liegt darin, dass insbesondere bei kurzen Bremsabständen der Fahrzeuge die Bremsgurte so stark aufgeheizt und erwärmt werden, dass im Extremfall der Pressitz der Bremsscheibeneinheit wirkungslos wird, weil durch die Erwärmung der Bremsgurte eine Durchmesservergrösserung entsteht, die letztlich den Pressitz der Nabe auf der Achswelle aufhebt. Die Nabe rutscht auf der Achswelle und das Fahrzeug verliert an Bremswirkung.

Man hat daher vorgeschlagen (in DE 33 20 543 A1) den radial zwischen Nabe und Bremsgurt liegenden Stegen eine bestimmte Kontur zu geben, um so zu verhindern, dass sich die bei der Durchmesservergrösserung entstehende Spannung allzusehr in einem Punkt konzentriert.

Man hat daher vorgeschlagen (GB 21 44 186 A) zur Verminderung der Erwärmung der Bremsgurte den auf der Rückseite der Bremsgurt angeordneten Kühlrippen unterschiedliche Formen zu geben, um die Kühlluft schneller in radialer Richtung aus den Bremsscheiben hinaus zu befördern.

Aus der Entgegenhaltung US-5 004 078 ist eine Bremsscheibe bekannt, welche dem Anmeldungsgegenstand aus dem Anspruch 1 nahekommt, wobei jedoch das Merkmal fehlt, dass die Befestigungsstege nach innen verlängert sind und dort in die Nabe übergehen.

Alle bisher bekannten Konstruktionen haben aber nicht den gewünschten Erfolg erzielen können, sodass man sich andere Wege einfallen liess, die aber auch nicht den vollen Erfolg brachten.

Der vorliegenden Erfindung liegt daher die Aufgabe zugrunde, die Nachteile der bekannten Konstruktionen zu vermeiden und die Vorteile der einteiligen Konstruktion zu nutzen, ohne Zwischenstücke verwenden zu müssen.

Die Lösung der Aufgabe besteht darin, dass zwischen den Rückseiten der Bremsgurte in den Befestigungsstegen Ausnehmungen paarweise angeordnet sind, die die bei der Erwärmung auftretende Verformung der Bremsgurte und die daraus herrührenden Spannungen in den Steg- und Nabenanbindungen erniedrigen, wobei die Gesamtfläche der Ausnehmungen mindestens 20%, jedoch höchstens 95% der zwischen den Bremsgurten liegenden Stegfläche ausmacht.

Der Vorteil der erfindungsgemässen Ausbildung der Monoblock-Bremsscheibe besteht darin, dass die Vorteile der Monoblock-Scheibe genutzt werden können, aber gleichzeitig die Spannungen in den Übergängen so klein gehalten werden können, dass sie insbesondere in den Übergängen von den Befestigungsstegen zur Nabe und zu den Bremsgurten so klein gehalten werden können, dass nicht die Gefahr einer Rissbildung vorhanden ist.

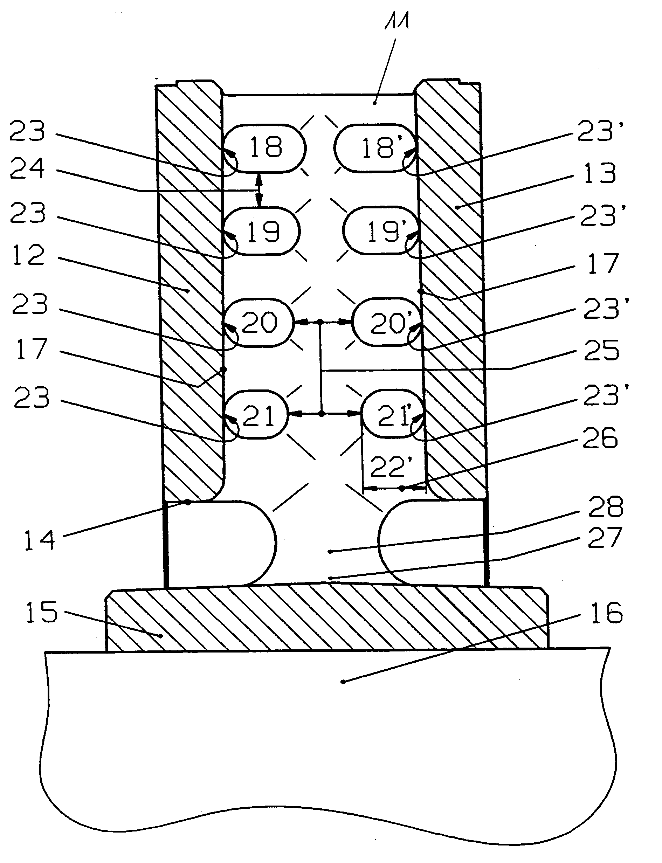

In der Zeichnung ist eine beispielsweise Ausführungsform der erfindungsgemässen Konstruktion dargestellt und zwar ein Schnitt in einer achsparallelen Ebene unmittelbar vor einem Befestigungssteg 11, an dessen Seiten je ein Bremsgurt 12 und 13 angeordnet ist. Nach der Innenseite zu ist der Befestigungssteg 11 über den inneren Durchmesser 14 der Bremsgurte 12,13 verlängert und geht dann in die Nabe 15 über, die ihrerseits auf der Achswelle 16 befestigt, zum Beispiel aufgepresst ist. Es kann aber auch jede andere an sich bekannte Befestigungsart verwendet werden. Normalerweise sind drei oder vier dieser Befestigungsstege 11 gleichmässig verteilt vorgesehen, aber die Anzahl der Befestigungsstege 11 hängt weitgehend von der Art der Befestigung der Nabe 15 auf der Achswelle 16 ab.

In dem Teil des Befestigungssteges 11, welcher unmittelbar zwischen den Rückseiten 17 der beiden Bremsgurte 12 und 13 liegt, sind Ausnehmungen 18 - 22' angeordnet, deren Gesamtfläche etwa 80% der zwischen den Bremsgurten 12,13 liegenden Stegfläche ausmacht. Alle Ausnehmungen haben die gleiche ovale Grundform, jedoch sind die Abmessungen unterschiedlich. Aber jede Ausnehmung 18 - 22' liegt mit dem einen Ende 23 bzw. 23' an der Rückseite 17 der Bremsgurte 12.13 an, wobei ein geringer Abstand konstruktionsbedingt vorhanden sein kann. Die Ausnehmungen sind paarweise angeordnet, wobei der Abstand 24 sowie der Abstand 25 der freien Enden der Ausnehmungen radial von innen nach aussen gesehen kleiner wird. Der Abstand 25 sollte aber nicht kleiner sein als 15% der längeren Ausnehmungsachse 26. Das Verbindungsstück 27 zwischen der Nabe 15 und dem Bremsring ist gut ausgerundet. Die schmalste Stelle 28 des Verbindungsstücks 27 hat eine Breite von etwa 50% des Abstandes der Rückseiten 17 der Bremsgurte.

Es ist natürlich ohne weiteres möglich, Variationen in der Anordnung der Ausnehmungen auf dem Steg vorzunehmen. So kann zum Beispiel eine Anordnung getroffen werden, bei der die Ausnehmungen abwechselnd an der einen und der anderen Rückseite 17 der Bremsgurte anliegen. Auch können die Ausnehmungen radial von innen nach aussen gesehen abwechselnd nur eine Ausnehmung und ein Paar der Ausnehmungen angeordnet sein.Auch gibt es die Möglichkeit jeweils nur eine Ausnehmung so anzuordnen, dass sie abwechselnd an der einen und auf der anderen Seite am Bremsgurt anliegen.

## Patentansprüche

1. Monoblock-Bremsscheibe für Scheibenbremsen von Schienenfahrzeugen, bei der einzelne die Bremsgurte (12,13) miteinander verbindende Stege (11) radial nach innen verlängert sind, wobei die Verlängerung in eine Nabe (15) übergeht und alle Teile aus einem Stück bestehen, dadurch gekennzeichnet, dass zwischen den Rückseiten (17) der Bremsgurte (12,13) in den Befestigungsstegen (11) Ausnehmungen (18 - 22') paarweise angeordnet sind, die die bei der Erwärmung auftretende Verformung der Bremsgurte (12,13) und die daraus herrührenden Spannungen in den Steg- und Nabenanbindungen erniedrigen, wobei die Gesamtfläche der Ausnehmungen (18 - 22') mindestens 20%, jedoch höchstens 95% der zwischen den Bremsgurten (12) und (13) liegenden Stegfläche ausmacht.

2. Monoblock-Bremsscheibe nach Anspruch 1 ,dadurch gekennzeichnet, dass die Ausnehmungen (18 - 22') abwechslungsweise mit Anlage an die Bremsgurte und ohne Anlage an die Bremsgurte angeordnet sind.

## Claims

1. Monobloc brake disc for disc brakes of rail vehicles, in which individual webs (11) which connect the brake webs (12,13) to one another are lengthened radially inwards, the lengthening merging with a hub (15) and all the parts consisting of one element, characterized in that recesses (18 - 22') are arranged in pairs between the reverse sides (17) of the brake webs (12, 13) in the attachment webs (11), the said recesses (18 - 22') reducing the deformation of the brake webs (12, 13) which occur during heating and also reducing the resulting tensions in the web and hub ties, the total surface of the recesses (18 - 22') constituting at least 20%, but at most 95%, of the web surface located between the brake webs (12) and (13).

2. Monobloc brake disc according to Claim 1, characterized in that the recesses (18 - 22') are arranged alternately resting against the brake webs and not resting against the brake webs.

## Revendications

1. Disque de frein monobloc, pour freins à disque de véhicules ferroviaires, dans lequel les différentes nervures (11) reliant ensemble les flasques de frein (12,13) sont prolongées radialement vers l'intérieur, le prolongement se transformant en un moyeu (15) et toutes les parties ne constituant qu'une seule pièce, caractérisé en ce que, entre les faces arrières (17) des flasques de frein (12,13) se trouvent, dans les nervures de fixation (11), des cavités (18 à 22') allant par paires, diminuant la déformation des flasques de frein (12,13) qui survient lors de l'échauffement et diminuant les contraintes provoquées par elle dans les liaisons de pistes et de moyeux, la surface totale des cavités (18-22') étant d'au moins 20 %, cependant d'au plus 95 % de la surface de nervure située entre les flasques de frein (12) et (13).

2. Disque de frein monobloc selon la revendication 1, caractérisé en ce que les évidements (18 à 22') sont disposés alternativement avec et sans appui sur les flasques de frein.
